# DEMANDE DE BREVET EUROPEEN

(11) **EP 1 089 467 A1**
(43) Date de publication de la demande: **04.04.2001**
(21) Numéro de dépôt: 00402655.5
(22) Date de dépôt: 26.09.2000
(51) Int. Cl.: H04B 10/18, H04B 10/17

(54) **Limiteur de puissance optique**

(30) Priorité: 29.09.1999 FR 9912142
(71) Demandeur: ALCATEL, 75008 Paris (FR)
(72) Inventeur: Shen, Alexandre, 75013 Paris (FR)
(74) Mandataire: Poulin, Gérard

(57) **Abrégé**

Limiteur de puissance optique caractérisé en ce qu'il comporte un interféromètre (1) par exemple de Mach-Zehnder asymétrique ayant une entrée (4), une sortie (5) et deux bras (3,2) l'un des bras (3) comportant un matériau absorbant saturable (6) et l'interféromètre produisant une interférence destructive entre les signaux présents en sortie de chacun des bras. L'invention est utilisable pour éliminer des perturbations présentes sur un signal d'entrée.

## Description

### Domaine de l'invention

L'invention se situe dans le domaine des dispositifs égalisateurs de la puissance de sortie d'un signal optique. De tels dispositifs sont destinés à égaliser la puissance de sortie d'un signal optique c'est-à-dire à supprimer une partie au moins des bruits parasites venant perturber le signal. Des travaux pour améliorer la puissance de sortie d'un amplificateur optique ont déjà été menés de façon à obtenir des divisions en longueur d'onde multiplexée bien réparties. Dans la plupart des solutions connues on utilise des dispositifs à boucle de contre réaction dont la fonction de transfert contribue à l'égalisation du signal. L'article de N. Takahashi et al., "An output power stabilized Erbium-doped fiber amplifier with automatic gain control", IEEE J. of Selected Topics in Quant. Elect., pp. 1019-1026, Vol. 3, N° 4, 1997, décrit un dispositif à contre réaction dans lequel une photodiode a été combinée avec un amplificateur électronique opérationnel et une diode laser et un amplificateur à fibre optique dopé à l'erbium. Le temps de réponse d'un tel dispositif est d'une milliseconde environ ce qui donne un égalisateur capable d'égaliser des fluctuations de l'ordre du kHz. On connaît aussi, décrit dans l'article de J-X. Cai et al., "Experimental demonstration of dynamic high-speed equalization of three WDM channels using acoustooptic modulators and a wavelength demultiplexer", IEEE Photon. Techn. Lett., pp. 678-680, Vol. 9, N° 5, 1997, un dispositif à contre réaction dans lequel un modulateur électroacousto-optique a été utilisé. Cet égalisateur permet d'obtenir des temps de réponse de l'ordre du 10^{ème} de µs ce qui conduit à un effacement de fluctuation pour des fluctuations de l'ordre de 10 MHz. Les dispositifs de l'art antérieur ne sont toutefois pas assez rapides pour supprimer des fluctuations telles que celles qui apparaissent lorsqu'on emploie des amplificateurs optiques pour transmettre des signaux de télécommunication avec des débits de l'ordre du Tbit/s. Il existe donc un besoin pour un dispositif capable de supprimer des fluctuations de l'ordre du THz.

### Brève description de l'invention

Selon l'invention, il est prévu d'utiliser un interféromètre de Mach-Zehnder comportant deux bras, un premier et un second, le premier bras comportant un matériau absorbant saturable. La puissance de sortie d'un tel matériau est nulle tant que la puissance d'entrée est inférieure à un seuil, et croissante ensuite, avec la puissance d'entrée, au-dessus de ce seuil. Le signal à égaliser est introduit dans l'interféromètre de Mach-Zehnder et se partage de façon égale entre chacun des deux bras. Lorsque le signal n'est pas perturbé, le matériau absorbant saturable ne laisse pas passer le signal, le signal passe donc par le bras qui ne comporte pas de matériau absorbant saturable et en sortie on retrouve le signal d'entrée divisé par deux c'est-à-dire avec un affaiblissement de trois décibels. Lorsqu'une perturbation vient augmenter momentanément la puissance d'entrée du signal, le matériau absorbant saturable laisse passer le signal et les signaux présents sur chacun des deux bras interfèrent, en sorte qu'à la sortie on a destruction du signal pendant le moment où le signal a dépassé le niveau requis. On sait que la puissance de saturation d'un matériau absorbant saturable est une fonction inverse du temps de réponse de ce matériau. Il sera donc nécessaire de faire un compromis entre le temps de réponse que l'on veut obtenir et le niveau de la fluctuation que l'on veut effacer. On peut admettre qu'un signal ayant une période de T pourra être perturbé par une fluctuation ayant un temps de transit du 5^{ème} de T. Ainsi, si on prend par exemple un signal ayant une période de dix nanosecondes correspondant à une fréquence de transmission de 100 MHz il conviendra de pouvoir effacer une fluctuation de deux nanosecondes. De même si on prend un signal dont la période est de une picoseconde correspondant à une fréquence de un THz il faudra pouvoir effacer une fluctuation de l'ordre de deux cents femtosecondes. En résumé, l'invention est relative à un limiteur de puissance optique caractérisé en ce qu'il comporte un interféromètre de Mach-Zehnder asymétrique ayant une entrée, une sortie et deux bras, l'un des bras comportant un matériau absorbant saturable et la structure produisant une interférence destructive entre les signaux présents en sortie de chacun des bras. De préférence, un amplificateur optique est également présent sur chacun des bras de façon à rétablir la puissance optique du signal de sortie au niveau désiré. L'interféromètre selon l'invention présente l'avantage de supprimer des fluctuations perturbatrices rapides et ceci avec une configuration simple évitant les systèmes à contre réaction de l'art antérieur.

### Brève description des dessins

L'invention sera maintenant décrite en regard des dessins annexés dans lesquels :
- la figure 1 est un schéma représentant un limiteur de puissance optique selon le mode général de l'invention ;
- la figure 2 est un limiteur de la puissance optique comportant sur chacun des bras un amplificateur optique à semi-conducteur ;
- les figures 3 et 4 représentent des courbes destinées à expliquer le fonctionnement du dispositif selon l'invention ;

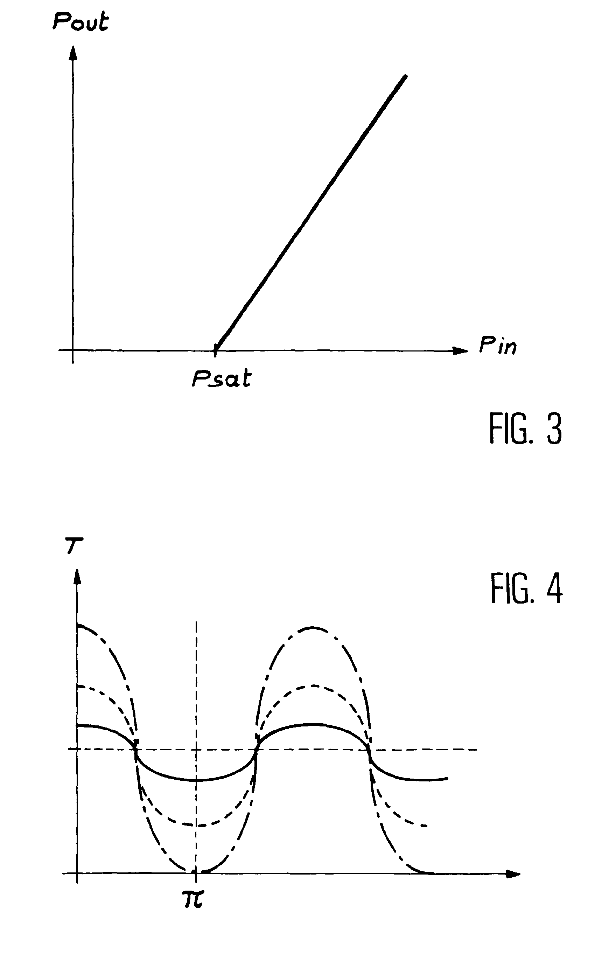

- la figure 3 représente la puissance de sortie d'un matériau absorbant saturable en fonction de la puissance d'entrée,
- la figure 4 représente le contraste de modulation en fonction du déphasage entre les signaux présents sur chacun des bras.

### Description de l'invention

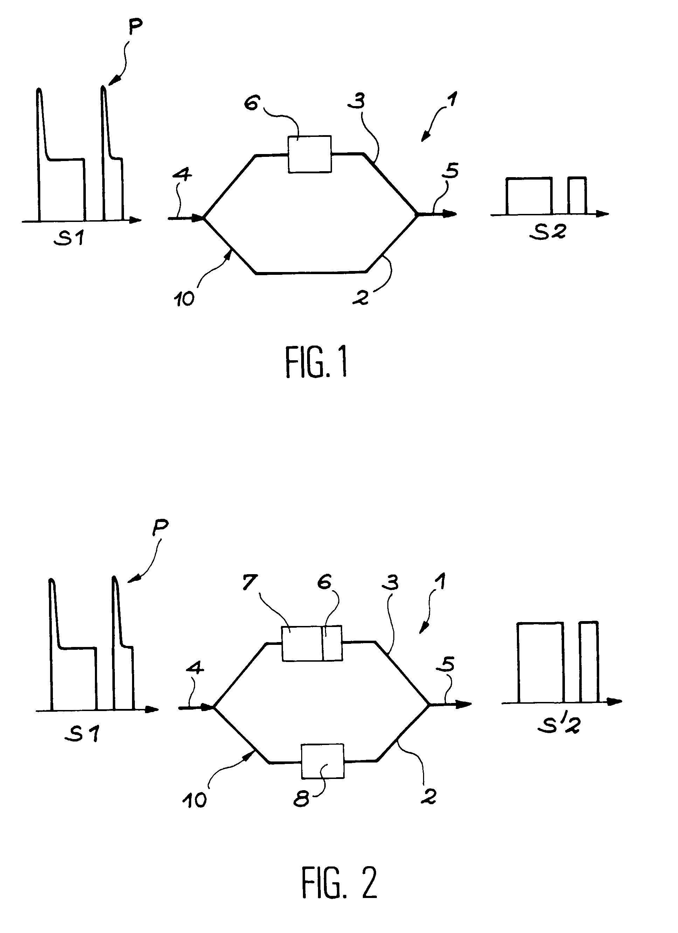

En référence à la figure 1, le dispositif 1 selon l'invention se présente sous la forme d'une structure de Mach-Zehnder ayant deux bras 2 et 3, une entrée 4 et une sortie 5. Le bras 3 comporte un matériau absorbant saturable 6, un signal présent à l'entrée 4 de ce dispositif et présentant comme représenté sur la figure 1, des pics de perturbation P ressort du dispositif 10 avec une puissance amoindrie et sans les pics de perturbation. La figure 2 représente le même dispositif que celui représenté figure 1 mais dans le cas de la figure 2, des amplificateurs 7 et 8 sont présents sur chacun des bras 3 et 2 respectivement. Sur la figure 2, l'amplificateur 7 du bras 3 est représenté en amont du matériau absorbant saturable 6. De façon alternative, l'amplificateur pourra aussi être placé en aval du matériau absorbant saturable 6. Le fonctionnement de ces dispositifs sera maintenant explicité en regard des figures 3 et 4.

Tant que la puissance d'entrée est inférieure à la puissance de saturation Psat représentée en abscisse de la figure 3, le bras 3 ne laisse passer aucun signal. En conséquence, le signal passe par le bras 2, il n'y a aucune interférence à la sortie 5 et le signal se retrouve amoindri de trois dB à la sortie 5. Si au contraire, la puissance d'entrée devient supérieure à la puissance de saturation alors le bras 3 laisse passer également le signal et les signaux présents sur les bras 2 et 3 interfèrent à la sortie 5 de façon destructive en fonction du retard de phase Δφ représenté figure 4. Il s'ensuit que si le déphasage est proche de π ou d'un nombre impair de fois π on approche du contraste 0 de l'interférogramme représenté figure 4 et la perturbation est grandement atténuée. Les premières simulations ont montré des atténuations de l'ordre de 40 dB. On voit ainsi que les pics de perturbation qui dépassent la puissance de saturation sont éliminés tandis que le reste du signal est transmis à travers l'interféromètre. Les amplificateurs à semi-conducteur 7 et 8 présents dans la version représentée figure 2 sur les bras 3 et 2 respectivement permettent de rétablir le signal à un niveau souhaité sur la sortie 5.

Comme représenté figure 2, l'amplificateur du bras 3 est de préférence placé en amont du matériau absorbant saturable 6. Le signal présent à l'entrée du matériau absorbant saturable se trouve ainsi à un niveau similaire au signal présent en sortie de l'amplificateur 8 se trouvant sur l'autre bras. De préférence, le gain de l'amplificateur 7 sera légèrement plus élevé que celui de l'amplificateur 8 de façon à compenser les pertes dans le matériau absorbant saturable 6.

Le mode de réalisation commenté en liaison avec les figures 1 et 2 est réalisé avec une structure interférométrique de Mach-Zehnder. L'homme du métier doit comprendre que l'invention n'est pas limité à ce mode et qu'il sera possible d'utiliser par exemple un interféromètre de MICHELSON.

## Revendications

1. Limiteur (10) de puissance optique pour un signal optique de puissance modulée caractérisé en ce qu'il comporte un interféromètre (1) ayant une entrée (4), une sortie (5) et deux bras (3,2) l'un des bras (3) comportant un matériau (6) absorbant saturable et l'interféromètre (1) produisant une interférence destructive entre les signaux présents en sortie de chacun des bras lorsque la puissance présente sur le bras comportant le matériau absorbant saturable dépasse la puissance de saturation du matériau saturable.

2. Limiteur (10) de puissance optique selon la revendication 1, caractérisé en ce que l'interféromètre (1) est un interféromètre de Mach-Zehnder asymétrique.

3. Limiteur (10) de puissance optique selon la revendication 1 ou 2, caractérisé en ce qu'il comporte en outre un amplificateur optique (7,8) présent sur chacun des bras (3,2) de l'interféromètre (1).

4. Limiteur (10) de puissance optique selon la revendication 3, caractérisé en ce que, sur le bras (3) comportant le matériau (6) absorbant saturable, l'amplificateur (7) est placé en amont de ce matériau (6).
